# NEUE EUROPÄISCHE PATENTSCHRIFT

(11) **EP 0 827 920 B2**
(45) Veröffentlichungstag und Bekanntmachung des Hinweises auf die Entscheidung über den Einspruch: **30.09.2009**
(45) Hinweis auf die Patenterteilung: 22.10.2003
(21) Anmeldenummer: 97115311.9
(22) Anmeldetag: 04.09.1997
(51) Int. Cl.: B65G 15/58

(54) **Magnetbandförderer für den hängenden Transport von Blechen oder dgl.**
Magnetic belt conveyor for hanging transport of metal sheets or the like
Convoyeur à courroie magnétique pour le transport suspendu de tôles ou similaires

(30) Priorität: 06.09.1996 DE 19636086
(43) Veröffentlichungstag der Anmeldung: 11.03.1998
(73) Patentinhaber: NSM Magnettechnik GmbH, 59399 Olfen (DE)
(72) Erfinder: Ulrich, Hans, 59379 Selm (DE); Kulik, Gerhard, 59349 Holzwickede (DE)
(74) Vertreter: Hennicke, Ernst Rüdiger

(56) Entgegenhaltungen:
- EP-B1- 0 893 372
- EP-B1- 0 904 242
- WO-A1-97/38927
- DE-A1- 4 433 912
- DE-B- 1 090 579
- DE-C- 3 814 341
- DE-C- 19 614 741
- US-A- 3 802 699
- US-A- 3 998 448

## Beschreibung

Die Erfindung betrifft einen Magnetbandförderer für den hängenden Transport von Blechen od.dgl., nach dem Oberbegriff des Anspruches 1.

In der blechverarbeitenden Industrie stellt sich häufig die Aufgabe, Bleche oder Werkstücke aus Blech wie z.B. Dosendeckel, Stanzteile in der Automobilindustrie od.dgl. hängend von einer Verarbeitungsstation zu einer weiteren Station zu transportieren. Für ferromagnetische Werkstoffe werden häufig Magnetbandförderer verwendet, bei denen das Förderband zwischen den einzelnen Magneten und den zu transportierenden Werkstücken angeordnet ist und bei seinem Umlauf um die Umkehrrollen die von den Magneten gehaltene Bleche mitnimmt.

Ein Nachteil der bekannten Magnetbandförderer besteht darin, daß damit ein Transport von nicht-magnetischen Werkstoffen wie z.B. Aluminiumblechen, Kunststofftafeln oder Holzverbundwerkstoffen nicht möglich ist. Die Förderer sind damit in ihrem Einsatz nur wenig flexibel und es ist erforderlich, für möglicherweise nur gelegentlich zu transportierende, nicht-ferromagnetische Werkstoffe in einem Betrieb andere geeignete Fördermittel vorzusehen.

Aus der US-3,998,448 ist eine Blech-Entstapeleinrichtung bekannt, in der mehrere Förderer zusammenwirken, um die auf einem Stapel von einem ersten Förderer herantransportierten Bleche zu vereinzeln und dann nacheinander für die weitere Verarbeitung weiterzubefördern. Dabei werden die zuvor mit Hilfe von Spreizmagneten von dem Stapel abgehobenen, vereinzelten Bleche von einem Unterdruckgreifer an ihrer Oberseite gefasst und angehoben, um sie an die Unterseite eines Magnetbandförderers anzuliegen. Ein Transport von Blechen aus nichtmagnetischen Werkstoffen ist mit dem bei der bekannten Einrichtung verwendeten Magnetbandförderer nicht möglich.

Aus der US-3,802,699 ist eine Fördervorrichtung bekannt, mit der von einem langen Band abgetrennte Einzelbleche auf einem Förderer aufliegend zu einer Stapelstation transportiert werden können. Hierbei sorgen unterhalb des Fördertrums des Förderriemens angeordnete Magneteinrichtungen und Unterdruckeinrichtungen dafür, daß die auf dem Förderband aufliegenden Bleche ihre Positivon auch dann beibehalten, wenn sie mit hoher Geschwindigkeit transportiert werden. Ein hängender Transport von Blechen ist mit dieser bekannten Fördereinrichtung nicht möglich.

Der Magnetbandförderer ist so ausgestaltet, daß damit auch nicht-ferromagnetische Bleche od.dgl. hängend transportiert werden können Dies wird dadurch gelöst, daß das Förderband ein Unterdruckförderband ist und der Magnetbandförderer mit einer am Förderband einen Unterdruck erzeugenden Unterdruckeinrichtung versehen ist. Es wird somit möglich, ferromagnetische Werkstoffe wie bekannt weiterhin mittels der Magnethalterelemente an dem Förderband zu halten oder wahlweise die am Förderband einen Unterdruck erzeugende Unterdruckeinrichtung zu verwenden, um die zu transportierenden Bleche od.dgl. durch die Sogwirkung am Förderband zu halten. Durch die Kombination von Magnetbandförderer und Unterdruckbandförderer wird eine größtmögliche Flexibilität der Fördereinrichtung errecht ,die einerseits den aus Sicht des Energieverbrauches besonders günstigen Transport von Eisenteilen mit Hilfe der Magnete und andererseits einen Transport von praktisch allen Werkstoffen erlaubt, die in flächige Anlage an das Förderband gebracht werden.

Ein gattungsgemäßer Magnetbandförderer ist aus der DE 196 14 741 C1 bekannt. Aufgabe der Erfindung ist es, einen Magnetbandförderer der gattungsgemäßen Art so auszugestalten, dass einzelne Unterdruckeinheiten schnell ab- und wieder zugeschaltet werden können, um einen schnellen Abwurf eines transportierten Bleches od.dgl. zu ermöglichen. Diese Aufgabe wird mit der Erfindung durch die Kombination der Merkmale des Patentanspruches 1 gelöst. Eine besonders vorteilhafte Ausgestaltung der Erfindung ergibt sich, wenn jedem Magnethalteelement eine separat ansteuerbare Unterdruckeinheit zugeordnet ist. Mit einer solchen Ausgestaltung ist es möglich, die mittels Unterdruck transportierten Gegenstände an praktisch jedem beliebigen Ort auf dem Transportweg abzuwerfen, an dem sich eine separat ansteuerbare Unterdruckeinheit befindet, indem die Unterdruckeinheit kurzzeitig von der Unterdruckeinrichtung getrennt wird, wenn das abzuwerfende Blech die jeweilige Unterdruckeinheit erreicht hat, wodurch die Sogwirkung in diesem Bereich kurzzeitig aufgehoben wird und das transportierte Blech infolge seiner Schwerkraft vom Förderband abfällt. Diese Art der Steuerbarkeit entspricht damit den Fähigkeiten von Magnetbandförderern mit mehreren Magnethalteelementen, die ebenfalls einzeln abschaltbar sein können, um ein ferromagnetisches Blech an jeder gewünschtes Stelle auf dem Transportweg abwerfen zu können. Gemäß der Erfindung sind einzelne Unterdruckeinheiten jeweils an eine eigene Unterdruckpumpe angeschlossen, vorzugsweise an eine mit Druckluft beaufschlagbare Venturidüse. Die jeweiligen Unterdruckeinheiten stehen dann über eine in den engsten Querschnitt der zugehörigen Venturidüse einmündenden Unterdruckleitung mit dieser in Verbindung; soll die Sogwirkung an einer dieser Unterdruckeinheiten kurzfristig aufgehoben werden, kann der Druckluftstrom durch die zugehörige Venturidüse für einen kurzen Zeitraum unterbrochen werden, wodurch der Sog an der Unterdruckeinheit infolge von Undichtigkeiten im System schnell abfällt und das Blech praktisch unmittelbar nach Abschalten des Druckluftstroms durch die Venturidüse von der Unterdruckeinheit abfällt.

Zweckmäßig ist jeder Unterdruckeinheit eine eigene Unterdruckpumpe zugeordnet. Da die eigene Unterdruckpumpe einer jeden damit versehen Unterdruckeinheit unmittelbar am zugehörigen Magnethalteelement angeordnet ist, ist das von der Unterdruckpumpe zur Erzeugung der Ansaugkraft zu evakuierende Volumen nur gering; mit einer solchen Anordnung ist es daher möglich, eine sehr kurze Schaltzeit zu erreichen, innerhalb derer die erforderliche Ansaugkraft an der jeweiligen Unterdruckeinheit wieder zur Verfügung steht, nachdem kurz zuvor ein Gegenstand durch Abschalten der Unterdruckpumpe für die Unterdruckeinheit abgeworfen wurde. In der Praxis lassen sich hier Schaltzeiten erreichen, die bei ca. 25 bis 30 msec. liegen und so praktisch die gleichen Werte erreichen, wie sie auch mit schaltbaren Magnethalteelementen erzielt werden. Eine konstruktiv besonders einfache Ausgestaltung ergibt sich, wenn die Unterdruckpumpen oberhalb der zugehörigen Magnethalteelemente angeordnet sind.

Es ist zweckmäßig, wenn jedes Magnethalteelement in an sich bekannter Weise im wesentlichen aus mindestens einem Permanentmagneten und einer schaltbaren Elektromagneteinrichtung besteht. Die Elektromagneteinrichtung kann dabei mit Strom beaufschlagt werden und dadurch ein das Magnetfeld des Permanentmagneten überlagerndes Streufeld erzeugen, wodurch die Wirkung des Permanentmagneten aufgehoben wird und ein zuvor gehaltenes Eisenblech vom Förderband an der Stelle des jeweiligen Magnethalteelementes abfällt. Diese an sich bei Magnetbandförderern bekannte Ausgestaltung ermöglicht daher genau wie die einzelnen Unterdruckeinheiten ein Abwerfen der transportierten Gegenstände an praktischer jeder beliebigen Stelle auf dem Transportweg.

Die Unterdruckeinheiten können im wesentlichen aus zum Förderband hin offenen Unterdruckkanälen bestehen, die über Anschlußleitungen an die Venturidüse(n) oder eine andere geeignete Unterdruckeinrichtung angeschlossen sind. Zur Vereinfachung der Montage ist es möglich, die Unterdruckkanäle von mindestens zwei benachbarten Unterdruckeinheiten in einer gemeinsamen Führungsschiene anzuordnen, die dann aus nicht-ferromagnetischem Material bestehen sollte, um ein Kurzschließen von benachbarten Magnethalterelementen auszuschließen. Mit einer solchen Ausgestaltung ist es also möglich, alle Magnethalteelemente bzw. Unterdruckeinheiten an einer gemeinsamen Führungsschiene auszurichten und in der richtigen Lage im Förderer zu justieren.

Das für den erfindungsgemäßen Förderer verwendete Förderband ist zweckmäßig an seiner den zu transportierenden Blechen zugewandten Halteseite mit einer Dichtschicht mit einer Vielzahl von in Transportrichtung hintereinander angeordneten Unterdruckvertiefungen versehen, deren Ansaugfläche groß im Verhältnis zu ihrem Volumen ist und die über Saugkanäle mit den Unterdruckkanälen in Verbindung sind. Wegen des geringen Volumens der Unterdruckvertiefungen ist bei einem solchen Transportband die Menge der nach einem kurzzeitigen Abschalten einer Unterdruckeinheit von dieser anschließend wieder abzusaugenden Luft sehr gering, so daß schnell wieder der zum Transport des nächstfolgenden Bleches erforderliche Unterdruck an der Ansaugfläche zur Verfügung steht. Das Förderband kann an seiner den Magnethalteelementen zugewandten Innenseite mit einer Führungsnut zur Aufnahme der Führungsschiene versehen sein, womit vorteilhaft ein Formschluß zwischen Transportband und Führungsleiste quer zur Transportrichtung erreicht wird. Insbesondere, wenn die Führungsnut seitlich von Dichtflächen begrenzt wird, kann ein Ansaugen von Falschluft in diesem Bereich weitgehend unterbunden werden.

Das Förderband kann weiter an seinen Außenkanten seitlich über die Dichtschicht vorspringende Haltebereiche aufweisen, die von am Förderer angeordneten Halteelementen untergriffen werden. Ein Durchhängen des Förderbandes und damit auftretende, ungewollte Undichtigkeiten zwischen Förderband und Unterdruckeinheiten kann so wirksam vermieden werden. Die Unterdruckvertiefungen im Förderband sind vorzugsweise etwa kreisförmig ausgestaltet mit einem Durchmesser, der mindestens 20-mal so groß ist wie ihre Tiefe.

Weitere Merkmale und Vorteile der Erfindung ergeben sich aus der nachfolgenden Beschreibung und den Zeichnungen, worin eine bevorzugte Ausführungsform der Erfindung an einem Beispiel näher erläutert ist. Es zeigt:
- Fig. 1: einen gattungsgemäßen Magnetbandförderer mit Unterdruckeinrichtung in einer schematischen Seitenansicht;
- Fig. 2: einen Querschnitt durch ein Magnethalteelement mit Unterdruckeinheit des Förderers nach Fig. 1, in einer vergrößerten Darstellung und
- Fig. 3: eine erfindungsgemäße Ausführungsform eines Magnethalteelements mit Unterdruckeinheit in einer Fig. 2 entsprechenden Darstellung.

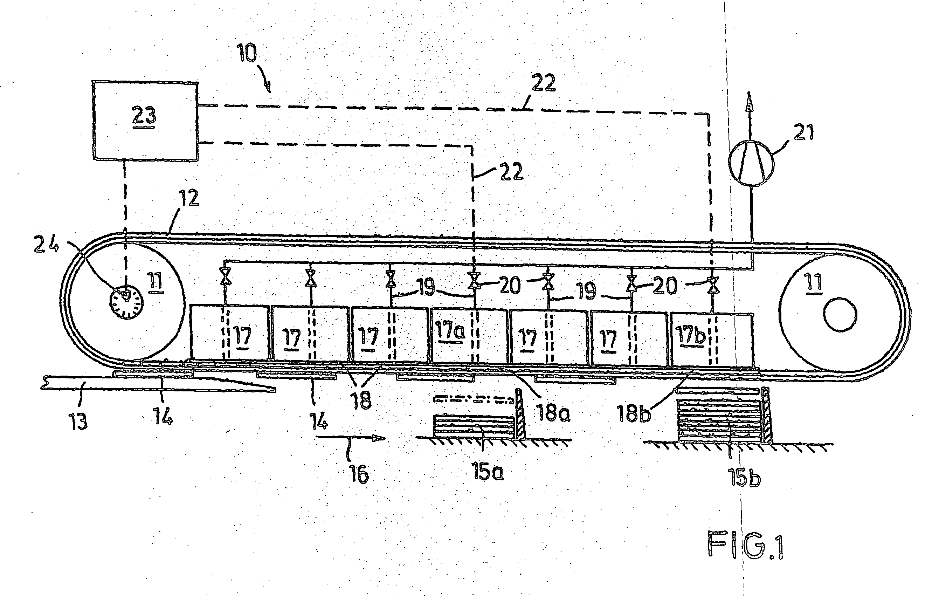

In Fig. 1 ist mit 10 ein Magnetbandförderer bezeichnet, mit einem um Umlenkrollen 11 umlaufenden, endlosen Förderband 12, das zum Transport von nacheinander mittels einer Übergaberampe 13 dem Förderer zugeführten Blechen 14 zu Stapelstellen 15 dient.

Der Magnetbandförderer 10 ist hierzu mit einer Vielzahl von in Förderrichtung 16 hintereinander angeordneten Magnethalteelementen 17 versehen, die den Transport von ferromagnetischen Blechen erlauben. Zusätzlich ist jedes Magnethalteelement mit einer eigenen Unterdruckeinheit 18 ausgestattet, die über Unterdruckleitungen 19 mit separat steuerbaren Schaltventilen 20 an eine Unterdruckeinrichtung 21, im dargestellten Beispiel ein Sauggebläse, angeschlossen sind. Die Steuerung der Schaltventile 20, d.h. ein Umschalten vom offenen in den geschlossenen Zustand des Ventiles und umgekehrt erfolgt über Steuerleitungen 22 von einer speicherprogrammierbaren Steuerung (SPS) 23, die ein Eingangssignal von einem Inkrementaldrehgeber 24 an der einen Umlenkrolle erhält. In Fig. 1 sind lediglich zwei Schaltventile an die SPS angeschlossen, die die Unterdruckeinheiten 18 an den Stapelstellen 15a, 15b ansteuern; es ist jedoch ohne weiteres ersichtlich, daß auch die Ventile der übrigen Unterdruckeinheiten in derselben Weise an die speicherprogrammierbare Steuerung angeschlossen sein können.

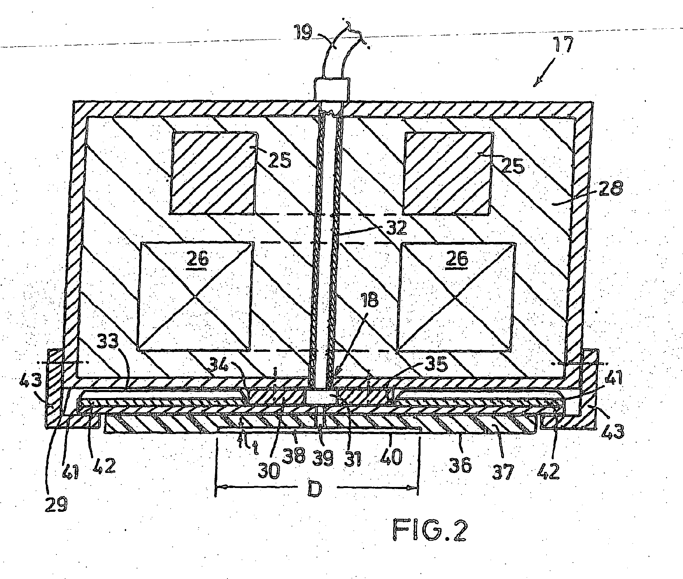

Der Aufbau der Magnethalteelemente 17 und der Unterdruckeinheiten 18 ist in Fig. 2 erkennbar. Jedes Magnethalteelement 17 ist mit zwei Permanentmagneten 25 versehen, die gemeinsam mit einem Elektromagneten 26 in einem Gehäuse 27 vergossen sind. Die Vergußmasse 28 kann Kunstharz oder eine andere, elektrisch bzw. magnetisch nicht leitende Masse sein. Die Unterdruckeinheit 18 besteht im wesentlichen aus einer an der Unterseite 29 des Gehäuses 27 angeschraubten Führungsschiene 30, in der ein Unterdruckkanal 31 angeordnet ist, der sich etwa über die Länge des zugehörigen Magnethalteelementes erstreckt und über ein durch das Gehäuse 27 und die Vergußmasse 28 geführtes Rohr 32 mit der Unterdruckleitung 19 verbunden ist. Die Führungsschiene kann sich über die gesamte Förderlänge des Magnetbandförderers 10 erstrecken und dabei alle Magnethalteelemente bzw. deren Unterdruckeinheiten zu einer gemeinsamen Baueinheit zusammenfassen; in diesem Fall besteht sie aus Aluminium oder Edelstahl, so daß die Permanentmagnete in den einzelnen Magnethalteelementen nicht kurzgeschlossen werden können. Zwischen den einzelnen Unterdruckkanälen der jeweiligen Unterdruckeinheiten verbleiben dann schmale Stege, so daß die Unterdruckkanäle zweier benachbarter Unterdruckeinrichtungen keine Verbindung untereinander haben.

Die Führungsschiene 30 dient zur formschlüssigen Führung des Förderbands 12 quer zur Förderrichtung 16, wozu das Förderband an seiner den Magnethalteelementen 17 zugewandten Innenseite 33 mit einer zentralen Führungsnut 34 versehen ist, die seitlich von Dichtflächen 35 begrenzt wird. An seiner den zu transportierenden Blechen 14 zugewandten Halteseite 36 ist das Förderband 12 mit einer Dichtschicht 37 versehen, die aus einem weichelastischen Material, beispielsweise aus aufgeschäumtem Polurethan mit einer Shore-Härte von 20 bis 60 besteht und die mit einer Vielzahl von in Transportrichtung 16 hintereinander angeordneten Unterdruckvertiefungen 38 versehen ist, die über kurze Saugkanäle 39 im Förderband 12 beim Durchlauf des Bandes nacheinander mit den verschiedenen Unterdruckkanälen 31 in Verbindung sind. Die Unterdruckvertiefungen 38 sind kreisförmig aus der Dichtschicht 37 ausgefräst und haben einen Durchmesser D von etwa 50 mm bei einer Tiefe t von 1 mm, weisen also bei vergleichsweise geringem Volumen eine große Ansaugfläche 40 auf.

An seinen Außenkanten 41 ist das Förderband 12 mit seitlich über die Dichtschicht 37 vorspringenden Haltebereichen 42 versehen, die von an den Gehäusen 27 der Magnethalteelemente 17 angeschraubten Halteelementen 43 untergriffen und gegen die Unterseite 29 des Gehäuses gedrückt werden, so daß das Förderband nicht nach unten durchhängen kann und zwischen Führungsschiene und Förderband Falschluft angesaugt wird.

Mit dem beschriebenen Magnetbandförderer können in bekannter Weise ferromagnetische Bleche od.dgl. von der Übergaberampe übernommen und zu den Stapelstellen 15a oder 15b transportiert und dort abgeworfen werden, indem der Elektromagnet 26 des entsprechenden Magnethalteelementes 17a bzw. 17b kurzzeitig beaufschlagt wird und so ein Streufeld erzeugt, das das Magnetfeld des zugehörigen Permanentmagneten aufhebt und das abzuwerfende Blech im Bereich der Abwurfstelle nicht länger an das Förderband 12 angezogen wird. Wenn mit der Fördereinrichtung nicht-ferromagnetische Bleche od.dgl. transportiert werden sollen, wird mit Hilfe des Unterdruckgebläses 21 in den Unterdruckkanälen 31 der Unterdruckeinheiten 18 und damit in den Unterdruckvertiefungen des Förderbandes 12 ein Sog erzeugt, der die zu transportierenden Bleche fest gegen die Dichtschicht 37 des Förderbandes anzieht. Um ein Blech an der Stelle 15a oder 15b abzuwerfen, wird die jeweilige Unterdruckeinheit 18a bzw. 18b durch Schließen des zugehörigen Schaltventiles 20 kurzzeitig von der Unterdruckeinrichtung 21 getrennt, wodurch der Druck in den Unterdruckvertiefungen infolge von Undichtigkeiten im System schnell ansteigt und die Saugwirkung in diesem Bereich aufgehoben wird, so daß das transportierte Blech an der gewünschten Stelle auf den Stapel 15a oder 15b abfällt.

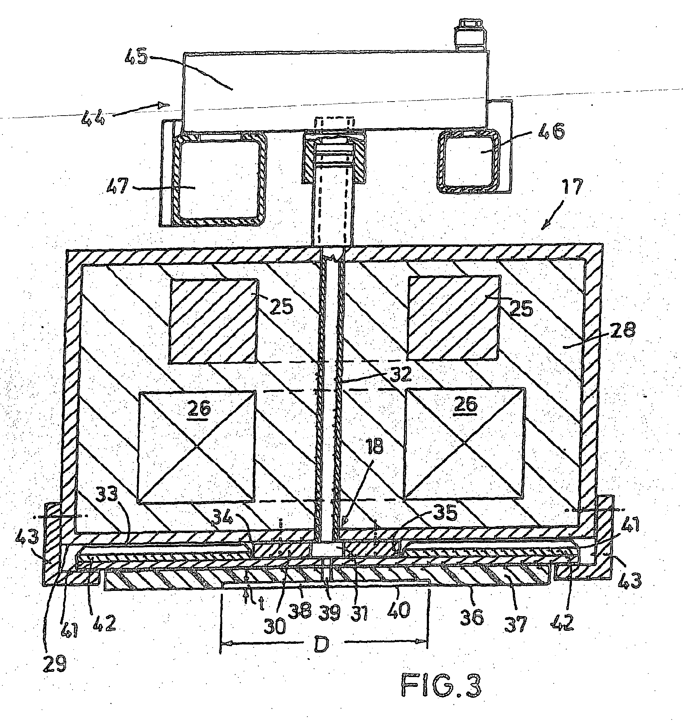

Fig. 3 zeigt eine erfindungsgemäße Ausführungsform eines Magnethalteelements 17 mit Unterdruckeinheit 18, die nicht über Leitungen und Schaltventile an eine entfernt angeordnete Unterdruckeinrichtung angeschlossen ist, sondern die eine eigene Unterdruckpumpe 44 aufweist, die unmittelbar oberhalb des Magnethalteelements 17 angeordnet ist. Bei dieser Ausführungsform besteht die Unterdruckpumpe 44 aus einer lediglich schematisch dargestellten Venturidüse 45 mit einem Zuluftkanal 46, mit dem Druckluft von etwa 6 bar zur Vakuumpumpe geführt wird, und mit einem Abluftkanal 47, über den die Betriebsabluft aus der Vakuumpumpe abgezogen wird. Aufgrund der räumlichen Nähe der Venturidüse 45 zur Unterdruckeinheit 18 ist das von der Vakuumpumpe zu evakuierende Volumen in dem Rohr 32, dem Unterdruckkanal 31 und der Unterdruckvertiefung 38 so gering, daß nach einem kurzfristigen Abschalten der Venturidüse zum Abwerfen eines Blechs 14 der zum Halten eines nachfolgenden Blechs erforderliche Unterdruck bereits nach einer Schaltzeit von lediglich 25 bis 30 msec. wieder zur Verfügung steht, mit einer solchen Anordnung also Schaltzeiten erreicht werden können, wie sie auch von den Magnethalteelementen nicht übertroffen werden. Zur Steuerung der Venturidüse, d.h. zu deren Zu- und Abschalten, kann diese ein vorgeschaltetes Dreiwegeventil aufweisen, mit dessen Hilfe die über den Zuluftkanal 46 zugeführte Druckluft über einen Bypass in den Abluftkanal 47 geleitet werden kann, wenn die zugehörige Unterdruckeinheit zum Abwerfen eines Bleches kurzfristig von der Pumpe entkoppelt werden soll.

## Patentansprüche

1. Magnetbandförderer (10) für den hängenden Transport von Blechen (14) od.dgl., mit mehreren, in Förderrichtung (16) hintereinander angeordneten Magnethalteelementen (17) und mit einem unter den Maghethalteelementen (17) vorbeilaufenden, endlosen Förderband (12), mit dem die Bleche (14) od.dgl. von einer Übernahmestelle (13) zu einer Übergabestelle (15) transportierbar sind, wobei das Förderband (12) ein Unterdruckförderband ist und der Magntetbandförderer (10) mit einer am Förderband (12) einen Unterdruck erzeugenden Unterdruckeinrichtung (21) versehen ist, **dadurch gekenzeichnet,** daß einzelne, Unterdruckeinheiten (18) jeweils an eine eigene Unterdruckpumpe (44) angeschlossen sind und daß die Unterdruckpumpe (44) einer jeden dieser einzelnen Unterdruckeinheiten (18) unmittelbar am zugehörigen Magnethalteelement (17) angeordnet ist.

2. Magnetbandförderer nach Anspruch 1, **dadurch gekennzeichnen**, daß jedem Magnethalteelement (17) eine separat ansteuerbare Unterdruckeinheit (18) zugeordnet ist.

3. Magnetbandförderer nach Anspruch 1 oder 2, **dadurch gekennzeichnet , daß** die Unterdruckpumpen (44) als mit Druckluft beaufschlagbare Venturidüsen (45) ausgestaltet sind.

4. Magnetbandförderer nach einem der Ansprüche 1 bis 3, **dadurch gekennzeichnet, daß** jeder Unterdruckeinheit (18) eine eigene Unterdruckpumpe (44) zugeordnet ist.

5. Magnetbandförderer nach einem der Ansprüche 1 bis 4, **dadurch gekennzeichnet, daß** die Unterdruckpumpe (44) oberhalb des zugehörigen Magnethalteelements (17) angeordnet ist.

6. Magnetbandförderer nach einem der Ansprüche 1 bis 5, **dadurch gekennzeichnet**, das jedes Magnethalteelement (17) im wesentlichen aus mindestens einem Permanentmagneten (25) undeinerschaltbaren Elektromagneteinrichtung (26) besteht.

7. Magnetbandförderer nach einem der Ansprüche bis 6, **dadurch gekennzeichnet, daß** die Unterdruckeinheiten (18) im wesentlichen aus zum Förderband (12) hin offenen Unterdruckkanälen (31) bestehen, die über Anschlußleitungen (19) an die Unterdruckeinrichtung (21) angeschlossen sind.

8. Magnetbandförderer nach Anspruch 7, **dadurch gekennzeichnet, daß** die Unterdruckkanäle (31) von mindestens zwei benachbarten Unterdruckeinheiten (18) in einer gemeinsamen Führungsschiene (30) angeordnet sind.

9. Magnetbandförderer nach Anspruch 8, **dadurch gekennzeichnet, daß** die Führungsschiene (30) aus nichtferromagnetischem Material besteht.

10. Magnetbandförderer nach einem der Ansprüche 7 bis 9, **dadurch gekennzeichnet, daß** das Förderband (12) an seiner den zu transportierenden Blechen (14) od.dgl. zugewandten Halteseite (36) mit einer Dichtschicht (37) mit einer Vielzahl von in Transportrichtung (16) hintereinander angeordneten Unterdruckvertiefungen (38) versehen ist, deren Ansaugfläche (40) groß im Verhältnis zu ihrem Volumen ist und die über Saugkanäle (39) mit den Unterdruckkanälen (31) in Verbindung sind.

11. Magnetbandförderer nach einem der Ansprüche 8 bis 10, **dadurch gekennzeichnet, daß** das Förderband (12) an seiner den Magnethalteelementen (17) zugewandten Innenseite (33) mit einer Führungsnut (34) zur Aufnahme der Führungsschiene (30) versehen ist.

12. Magnetbandförderer nach Anspruch 11, **dadurch gekennzeichnet, daß** die Führungsnut (34) seitlich von Dichtflächen (35) begrenzt wird.

13. Magnetbandförderer nach einem der Ansprüche 10 bis 12, **dadurch gekennzeichnet, daß** das Förderband (12) an seinen Aussenkanten (41) seitlich über die Dichtschicht (37) vorspringende Haltebereiche (42) aufweist, die von am Förderer angeordneten Halteelementen (43) untergriffen werden.

14. Magnetbandförderer nach einem der Ansprüche 10 bis 13, **dadurch gekennzeichnet, daß** die Unterdruckvertiefungen (38) etwa kreisförmig sind mit einem Durchmesser (D), der mindestens 20-mal so groß ist wie ihre Tiefe (t).

## Claims

1. Magnetic belt conveyor (10) for the hanging transport of metal sheets (14) or the like, with several magnetic holding elements (17) which are arranged successively in the conveyor direction (16) and with an endless conveyor belt (12) which runs below the magnetic holding elements (17), with which the metal sheets (14) or the like can be transported from a take-over position (13) to a transfer position (15), whereas the conveyor belt (12) is a vacuum conveyor belt and the magnetic belt conveyor (10) is provided with a vacuum device (21) producing a vacuum at the conveyor belt, **characterised in that** individual vacuum units (18) each are connected to an own vacuum pump (44) and **in that** the vacuum pump (44) of each of these individual vacuum units (18) is arranged immediately at the associated magnetic holding element (17).

2. Magnetic belt conveyor according to claim 1, **characterised in that** every magnetic holding unit (17) has a separately accessible vacuum unit (18) assigned thereto.

3. Magnetic belt conveyor according to claim 1 or 2, **characterised in that** the vacuum pumps (44) are formed as venturi nozzles (45) which can be charged with pressurised air.

4. Magnetic belt conveyor according to one of Claims 1 to 3, **characterised in that** every vacuum unit (18) has its own vacuum pump (44) assigned thereto.

5. Magnetic belt conveyor according to one of Claims 1 to 4, **characterised in that** the vacuum pump (44) is arranged above the associated magnetic holding element (17).

6. Magnetic belt conveyor according to one of claims 1 to 5, **characterised in that** every magnetic holding element (17) essentially consists of at least one permanent magnet (25) and a switchable electromagnetic unit (26).

7. Magnetic belt conveyor according to one of Claims 1 to 6, **characterised in that** the vacuum units (18) essentially consist of vacuum channels (31) which are open towards the conveyor belt (12), which channels are connected to the vacuum device (21) by connecting lines (19).

8. Magnetic belt conveyor according to claim 7, **characterised in that** the vacuum channels (31) of at least two adjacent vacuum units (18) are arranged in a common guide rail (30).

9. Magnetic belt conveyor according to claim 8, **characterised in that** the guide rail (30) consists of non-ferromagnetic material.

10. Magnetic belt conveyor according to one of claims 7 to 9, **characterised in that** the conveyor belt (12) is provided with a plurality of vacuum recesses (38) which are arranged successively m the transport direction (16) at the holding side (36) with a sealing layer (37) facing the metal sheets (14) to be transported, the suction surface (40) of which is large in relation to their volume and which are in connection with the vacuum channels (31) by suction channels (39).

11. Magnetic belt conveyor according to one of claims 8 to 10, **characterised in that** the conveyor belt (12) is provided with a guide groove (34) at the inner side (33) facing the magnetic holding elements (17) for receiving the guide rail (30).

12. Magnetic belt conveyor according to claim 11, **characterised in that** the guide groove (34) is laterally limited by sealing surfaces (35).

13. Magnetic belt conveyor according to one of claims 10 to 12, **characterised in that** the conveyor belt (12) comprises, at its outer edges (41), holding regions (42) which project laterally over the sealing layer (37), which are gripped from underneath by holding elements (43) arranged at the conveyor.

14. Magnetic belt conveyor according to one of Claims 10 to 13, **characterised in that** the vacuum recesses (38) are approximately circular with a diameter (D) which is at least 20 times as large as their depth (t).

## Revendications

1. Convoyeur à courroie magnétique (10) pour le transport suspendu de tôles (14) ou similaires, comportant plusieurs éléments magnétiques de maintien (17) disposés les uns derrière les autres dans le sens du transport (16) et comportant une courroie de transport (12) sans fin défilant sous les éléments magnétiques de maintien (17), au moyen de laquelle les tôles (14) ou similaires peuvent être transportées d'un 10 emplacement de reprise (13) à un emplacement de transfert (15), ce qui la courroie de transport (12) est une courroie de transport à dépression et le convoyeur à courroie magnétique (10) est pourvu d'un dispositif à dépression (21) produisant une dépression sur la courroie de transport (12), **caractérisé en ce que** unités à dépression individuelles (18) sont raccordées chaque fois à une pompe à dépression (44) qui leur est propre et **en ce que** la pompe à dépression (44) de chaque unité à dépression individuelle (18) est disposée directement sur l'élément magnétique de maintien (17) correspondant.

2. Convoyeur à courroie magnétique selon la revendication 1, **caractérise en ce qu'**une unité à dépression (18) pouvant être commandée séparément est affectée à chaque élément magnétique de maintien (17).

3. Convoyeur à courroie magnétique selon la revendication 1 ou 2, **caractérise en ce que** les pompes à dépression (44) sont conçues en tant que buses de Venturi (45) pouvant être alimentées en air comprimé.

4. Convoyeur à courroie magnétique selon l'une des revendications 1 à 3, **caractérise en ce qu'**à chaque unité à dépression (18) est associée sa propre pompe à dépression (44).

5. Convoyeur à courroie magnétique selon l'une des revendications 1 à 4, **caractérise en ce que** la pompe à dépression est disposée au-dessus de 5 l'élément magnétique de maintien (17) correspondant.

6. Convoyeur à courroie magnétique selon l'une des revendications 1 à 5, **caractérise en ce que** chaque élément magnétique de maintien (17) est essentiellement constitue d'au moins un aimant permanent (25) et d'un dispositif électromagnétique (26) commandable.

7. Convoyeur à courroie magnétique selon l'une des revendications 1 à 6, **caractérise en ce que** les unités à dépression (18) sont essentiellement constituées de canaux sous dépression (31) ouverts vers la courroie de transport (12), qui sont raccordes, par des conduites de raccordement (19), au dispositif à dépression (21).

8. Convoyeur à courroie magnétique selon la revendication 7, **caractérisé en ce que** les canaux sous dépression (31) d'au moins deux unités à dépression (18) voisine sont disposes dans un rail de guidage (30) commun.

9. Convoyeur à courroie magnétique selon la revendication 9, **caractérise en ce que** le rail de guidage (30) est constitue d'une matière non ferromagnétique.

10. Convoyeur à courroie magnétique selon l'une des revendications 7 à 9, **caractérise en ce que** la courroie de transport (12) est pourvue sur son côté de maintien (36) tourne vers les tôles (14) à transporter ou 25 similaires, d'une couche d'étanchéité (37) avec un grand nombre de renfoncements à dépression (38), disposes les uns derrière les autres dans le sens du transport (16), dont la surface d'aspiration (40) est grande par rapport à leur volume, et qui communiquent par des canaux d'aspiration (39), avec les canaux sous dépression (31).

11. Convoyeur à courroie magnétique selon l'une des revendications 8 à 10, **caractérise en ce que** la courroie de transport (12) est pourvue, sur son côté intérieur (33) tourne vers les éléments magnétiques de maintien (17), d'une rainure de guidage (34) pour recevoir le rail de 5 guidage (30).

12. Convoyeur à courroie magnétique selon la revendication 11, **caractérise en ce que** la rainure de guidage (34) est limitée sur les côtes par des surfaces d'étanchéité (35).

13. Convoyeur à courroie magnétique selon l'une des revendications 10 à 12, **caractérise en ce que** la courroie de transport (12) comporte, sur ses cötes extérieurs (41), des zones de maintien (42) faisant saillie latéralement de la couche d'étanchéité (37), sous lesquelles passent des éléments de maintien (43) disposes sur le convoyeur.

14. Convoyeur à courroie magnétique selon l'une des revendications 10 à 13, **caractérise en ce que** les renfoncements à dépression (38) sont approximativement circulaires avec un diamètre (D) qui est au moins 20 fois supérieur à leur profondeur (t).
